# EUROPEAN PATENT APPLICATION

(11) **EP 4 741 050 A1**
(43) Date of publication of application: **13.05.2026**
(21) Application number: 24306891.3
(22) Date of filing: 12.11.2024
(51) Int. Cl.: B01J 8/18, C01B 17/22, C01D 15/00

(54) **CONTINUOUS PRODUCTION OF LITHIUM SULFIDE**

(60) Divisional application: 25223556.9
(71) Applicant: Technip Energies France, 92741 Nanterre Cedex (FR)
(72) Inventor: ECCLESTON, Eric, 92741 Nanterre Cedex (FR); WAGNER, Eric Stanley, 92741 Nanterre Cedex (FR)
(74) Representative: Edson, Russell Gregory

(57) **Abstract**

A system and method of continuously producing lithium sulfide from a lithium-bearing feedstock is disclosed. The method may include introducing a continuous feed of the lithium-bearing feedstock into a fluidized bed reactor along with a continuous feed of a reducing gas. The lithium-bearing feedstock may be converted into lithium sulfide in the fluidized bed reactor by reacting the lithium-bearing feedstock with a sulfur-bearing gas in the presence of a reducing atmosphere created by the reducing gas. The temperature of the fluidized bed reactor may be controlled to facilitate the conversion reaction, such as by injecting an oxygen-containing gas into the fluidized bed reactor to react exothermically with the reducing gas. The lithium-bearing feedstock may be lithium hydroxide. The reducing gas may be hydrogen, carbon monoxide, or a combination thereof. The sulfur-bearing gas may be hydrogen sulfide, which may be generated externally to or directly within the fluidized bed reactor.

## Description

### Technical Field

The present disclosure relates generally to producing lithium sulfide, and more particularly although not necessarily exclusively, to continuously producing lithium sulfide from a lithium-bearing feedstock.

### Background

Lithium sulfide may be used in the manufacturing of lithium-sulfur batteries. There is a growing interest around the use of lithium-sulfur batteries as a power source at least because lithium-sulfur batteries have a significantly higher energy density than other types of lithium batteries. For example, lithium-sulfur batteries can store as much as three times more energy per unit weight than other types of lithium batteries. Lithium-sulfur batteries also offer less risk of overheating during charging or discharging cycles and thus, less risk of associated fire danger. Further, because lithium-sulfur batteries are also of lighter weight than other types of lithium batteries of comparable energy storage capacity, lithium-sulfur batteries may be particularly attractive as a power source for manned and unmanned aerial vehicles, as well as electric land vehicles.

### Summary

As used below, any reference to a series of examples is to be understood as a reference to each of those examples disjunctively (e.g., "Examples 1-4" is to be understood as "Examples 1, 2, 3, or 4").

Example No. 1 is a method of producing lithium sulfide including continuously introducing a lithium-bearing feedstock into a fluidized bed reactor. The method also includes generating a reducing atmosphere in the fluidized bed reactor by continuously introducing a reducing gas into the fluidized bed reactor, and controlling a temperature of the fluidized bed reactor by controllably injecting an oxygen-containing gas into the fluidized bed reactor such that the oxygen-containing gas reacts exothermically with the reducing gas. The method additionally includes reacting the lithium-bearing feedstock with a sulfur-bearing gas within the reducing atmosphere in the fluidized bed reactor to thereby convert the lithium-bearing feedstock into lithium sulfide, and discharging the lithium sulfide from the fluidized bed reactor.

Example No. 2 is Example No. 1, wherein the lithium-bearing feedstock is lithium hydroxide, and the reducing gas is hydrogen, carbon monoxide, or a combination of both.

Example No. 3 is Example No. 1 or Example No. 2, wherein the sulfur bearing gas is gaseous hydrogen sulfide.

Example No. 4 is Example No. 3, wherein the gaseous hydrogen sulfide is generated externally to the fluidized bed reactor by combining liquid sulfur with hydrogen to form the gaseous hydrogen sulfide, and the gaseous hydrogen sulfide is continuously introduced into the fluidized bed reactor.

Example No. 5 is Example No. 3, wherein the reducing gas is or includes hydrogen and the gaseous hydrogen sulfide is generated in the fluidized bed reactor by continuously introducing liquid sulfur into the fluidized bed reactor such that the liquid sulfur reacts with at least some of the hydrogen.

Example No. 6 is Example No. 3, wherein the reducing gas is or includes hydrogen and the gaseous hydrogen sulfide is generated in the fluidized bed reactor by creating a mixture of solid sulfur and the lithium-bearing feedstock and continuously introducing the mixture into the fluidized bed reactor such that the solid sulfur in the mixture reacts with at least some of the hydrogen.

Example No. 7 is any of Example No. 1 to Example No. 6, further comprising recovering lithium sulfide solids from a stream of exhaust gas discharged from the fluidized bed reactor and combining the lithium sulfide solids with the lithium sulfide discharged from the fluidized bed reactor.

Example No. 8 is any of Example No. 1 to Example No. 7, further comprising recovering solid sulfur from a stream of exhaust gas discharged from the fluidized bed reactor and reusing the recovered solid sulfur to generate, at least in part, the sulfur-bearing gas.

Example No. 9 is any of Example No. 1 to Example No. 8, further comprising recovering heat from a stream of exhaust gas discharged from the fluidized bed reactor and returning the recovered heat to the fluidized bed reactor via heating with the recovered heat, prior to introduction into the fluidized bed reactor, one or both of the lithium-bearing feedstock and the oxygen-containing gas.

Example No. 10 is any of Example No. 1 to Example No. 9, wherein the temperature of the fluidized bed reactor is maintained between 450 °C and 600 °C.

Example No. 11 is a system for continuously producing lithium sulfide. The system includes a fluidized bed reactor, and a source of a lithium-bearing feedstock in communication with the fluidized bed reactor and usable to supply a continuous feed of the lithium-bearing feedstock to the fluidized bed reactor. The system also includes a source of a reducing gas in communication with the fluidized bed reactor and usable to supply a continuous feed of the reducing gas to the fluidized bed reactor. The system additionally includes an oxygen-containing gas injector associated with the fluidized bed reactor and configured to controllably inject an oxygen-containing gas into the fluidized bed reactor to control a temperature of the fluidized bed reactor via an exothermic reaction of the oxygen-containing gas with the reducing gas, and a sulfur-bearing gas within the fluidized bed reactor. In the system, the fluidized bed reactor is configured to produce the lithium sulfide through a conversion reaction of the lithium-bearing feedstock with the sulfur-bearing gas within a reducing atmosphere in the fluidized bed reactor.

Example No. 12 is Example No. 11, wherein the lithium-bearing feedstock is lithium hydroxide, and the reducing gas is hydrogen, carbon monoxide, or a combination of both.

Example No. 13 is Example No. 11 or Example No. 12, wherein the source of the reducing gas is a hydrogen generator configured to produce a mixture of hydrogen and carbon monoxide by steam heating natural gas in the presence of a catalyst.

Example No. 14 is any of Example No. 11 to Example No. 13, wherein the sulfur-bearing gas is gaseous hydrogen sulfide.

Example No. 15 is Example No. 14, further comprising a hydrogen sulfide generator in communication with the fluidized bed reactor, the hydrogen sulfide generator configured to produce liquid sulfur by melting solid sulfur and to combine the liquid sulfur with hydrogen to form the gaseous hydrogen sulfide for introduction into the fluidized bed reactor.

Example No. 16 is Example No. 14, wherein the reducing gas is or includes hydrogen, and a sulfur melter is in communication with the fluidized bed reactor and is configured to produce liquid sulfur by melting solid sulfur and to introduce the liquid sulfur into the fluidized bed reactor to form the gaseous hydrogen sulfide in the fluidized bed reactor through a reaction of the liquid sulfur with at least some of the hydrogen.

Example No. 17 is Example No. 14, wherein the reducing gas is or includes hydrogen, and a feed blender is in communication with the fluidized bed reactor and is configured to produce a mixture of solid sulfur and the lithium-bearing feedstock and to introduce the mixture into the fluidized bed reactor to form the gaseous hydrogen sulfide in the fluidized bed reactor through a reaction of the solid sulfur in the mixture with at least some of the hydrogen.

Example No. 18 is a reactant generation system for a continuous production lithium sulfide fluidized bed reactor. The reactant generation system includes a hydrogen generator in fluid communication with a natural gas source and a steam source. The hydrogen generator is configured to generate hydrogen and carbon monoxide by using steam from the steam source to heat natural gas from the natural gas source in the presence of a catalyst. A hydrogen sulfide generator is in fluid communication with the fluidized bed reactor, the hydrogen generator, and the steam source, and is arranged to receive solid sulfur from a solid sulfur source, a portion of the steam from the steam source, and a portion of the hydrogen generated by the hydrogen generator. The hydrogen sulfide generator is also configured to produce liquid sulfur by melting the solid sulfur using the steam and to continuously generate gaseous hydrogen sulfide for introduction into the fluidized bed reactor by reacting the liquid sulfur with the hydrogen from the hydrogen generator.

Example No. 19 is Example No. 18, wherein the hydrogen generator is further in fluid communication with the fluidized bed reactor to discharge hydrogen, carbon monoxide, or both, as a reducing gas into the fluidized bed reactor.

Example No. 20 is Example No. 18 or Example. No. 19, wherein the hydrogen sulfide generator is further arranged to receive, from a gas treatment and sulfur recovery unit, recycled solid sulfur recovered by the gas treatment and sulfur recovery unit from an exhaust gas stream of the fluidized bed reactor, and is configured to use at least some of the recycled solid sulfur to generate the gaseous hydrogen sulfide.

### Brief Description of the Drawings

FIG. 1 is a schematic representation of a system for producing lithium sulfide from a lithium-bearing feedstock according to one example configuration.
FIG. 2 is a schematic representation of a system for producing lithium sulfide from a lithium-bearing feedstock according to another example configuration.
FIG. 3 is a schematic representation of a system for producing lithium sulfide from a lithium-bearing feedstock according to another example configuration.
FIG. 4 is a flowchart illustrating a method of producing lithium sulfide from a lithium-bearing feedstock according to one example.

### Detailed Description

Certain aspects and examples of the present disclosure relate to a system and method of continuously producing lithium sulfide (Li₂S) from a lithium-bearing feedstock in the presence of a reducing atmosphere. System and method examples are directed to producing battery-grade lithium sulfide in sufficiently large quantities to support the commercial production of lithium-sulfur batteries. In at least some examples, the lithium-bearing feedstock may be lithium hydroxide. The lithium hydroxide may be purified hydrated lithium hydroxide.

In one example configuration, a system for continuously producing lithium sulfide can utilize a fluidized bed reactor. A continuous feed of a lithium-bearing feedstock can be directed to the fluidized bed reactor where the lithium-bearing feedstock may be contacted with a sulfur-bearing fluidizing gas. In some examples, the sulfur-bearing fluidizing gas may comprise hydrogen sulfide (H₂S) and a reducing agent, such as hydrogen (H), carbon monoxide (CO), or a mixture thereof. Including the reducing agent in the sulfur-bearing fluidizing gas causes the reaction of the lithium-bearing feedstock with the sulfur-bearing fluidizing gas to occur in a reducing atmosphere, thereby ensuring that the reaction produces lithium sulfide and not lithium sulfate. The lithium-bearing feedstock may additionally contain an amount of free moisture (i.e., liquid water), as well as other impurities or additives. When the lithium-bearing feedstock is lithium hydroxide, the lithium hydroxide may be provided in either an anhydrous form (e.g., LiOH), a hydrated form (e.g., LiOH•H₂O), or a mixture of both.

The fluidized bed reactor can be maintained at an elevated temperature to facilitate the reactions that convert the lithium-bearing feedstock into lithium sulfide. For example, the temperature of the fluidized bed reactor may be maintained within a temperature range of between 450 °C and 600 °C. Temperature control of the fluidized bed reactor may be accomplished via controlled injection of an oxygen-containing gas, such as air. More specifically, air or another oxygen-containing gas can be injected into the fluidized bed reactor in a controlled manner, whereby the air or other oxygen-containing gas will react exothermically with the hydrogen and/or another reducing agent present in the sulfur-bearing fluidizing gas to generate the heat required to sustain a continuous lithium sulfide conversion reaction.

The sulfur-bearing gas (e.g., hydrogen sulfide) and the reducing agent used in the reaction to produce lithium sulfide may be provided to the reaction in several ways. In one example, the hydrogen sulfide can be generated outside of the fluidized bed reactor, such as by reacting hydrogen with sulfur in a hydrogen sulfide generator. For example, steam or heat from another source may be used to produce liquid sulfur by heating and melting solid sulfur. The liquid sulfur can then be contacted with hydrogen, which will react with the liquid sulfur to produce gaseous hydrogen sulfide. The hydrogen used to produce the liquid sulfur may be obtained from a number of possible hydrogen sources. For example, the hydrogen may be supplied by a hydrogen generator that that generates hydrogen by a steam-methane reforming process using natural gas and steam. In some examples, the same hydrogen source used to supply the hydrogen used to generate the gaseous hydrogen sulfide may also supply the hydrogen that acts as the reducing agent for the reaction of the lithium-bearing feedstock and the hydrogen sulfide in the fluidized bed reactor. When the hydrogen is supplied by a hydrogen generator, for example, a portion of the generated hydrogen can be directed to the fluidized bed reactor and another portion of the generated hydrogen can be directed to the hydrogen sulfide production process.

In another example, hydrogen sulfide can be generated within the fluidized bed reactor instead of generating the gaseous hydrogen sulfide externally and subsequently introducing it to the fluidized bed reactor. In such an example, solid sulfur can be melted, cooled, and then directly injected into the fluidized bed reactor. The hydrogen reducing gas separately introduced into the fluidized bed reactor can then react with the liquid sulfur inside the fluidized bed reactor to generate the gaseous hydrogen sulfide used to react with and convert the lithium-bearing feedstock to lithium sulfide. An amount of hydrogen in excess of that required to convert the injected melted sulfur to hydrogen sulfide can be supplied to the fluidized bed reactor, and the excess hydrogen may serve as the reducing agent. The hydrogen used to react with the liquid sulfur inside the fluidized bed reactor to generate the hydrogen sulfide gas as well as any hydrogen used as a reducing agent may be obtained from a number of possible hydrogen sources, including from a hydrogen generator as described above.

In another example, solid sulfur may be blended with the lithium-bearing feedstock outside of the fluidized bed reactor, and the mixture of the sulfur and the lithium-bearing feedstock can thereafter be introduced to the fluidized bed reactor. The hydrogen reducing gas separately introduced into the fluidized bed reactor can then react with the solid sulfur inside the fluidized bed reactor to generate the gaseous hydrogen sulfide used to react with and convert the lithium-bearing feedstock to lithium sulfide. An amount of hydrogen in excess of that required to convert the sulfur to hydrogen sulfide can be supplied to the fluidized bed reactor, and the excess hydrogen may serve as the reducing agent. The hydrogen used to react with the sulfur inside the fluidized bed reactor to generate the hydrogen sulfide gas as well as any hydrogen used as a reducing agent may be obtained from a number of possible hydrogen sources, including from a hydrogen generator described above.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

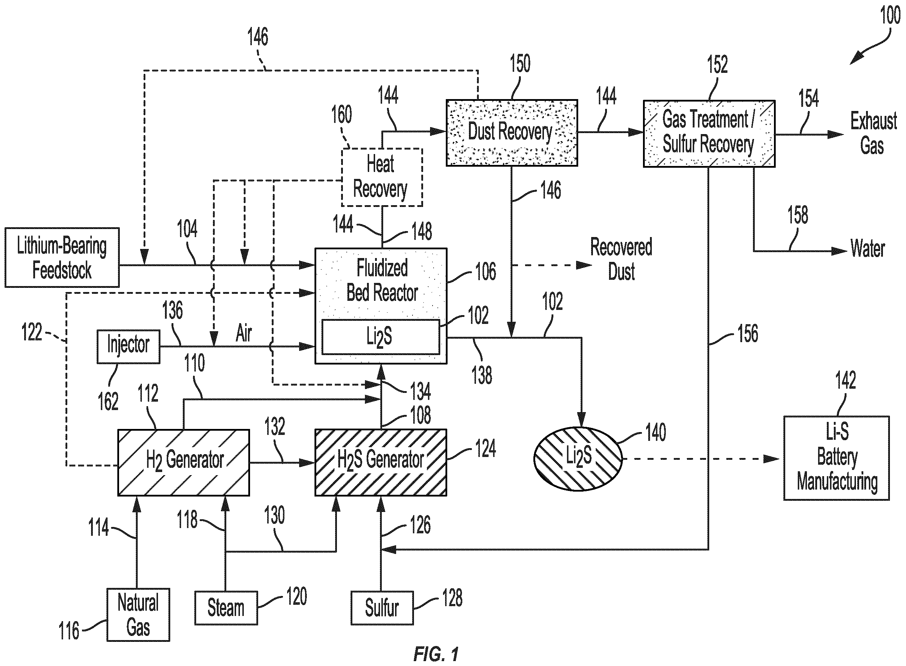

FIG. 1 is a schematic representation of a system 100 for continuously producing lithium sulfide 102 from a lithium-bearing feedstock 104 according to one example configuration. In some examples, the lithium-bearing feedstock 104 may be lithium hydroxide, but other lithium-bearing feedstocks that can be converted to lithium sulfide by contact with a sulfur-bearing gas such as hydrogen sulfide in a reducing atmosphere may be utilized in other examples. For example and without limitation, the lithium-bearing feedstock may be a lithium salt such as lithium carbonate or lithium sulfate in other examples.

Systems according to examples of the disclosure can continuously produce lithium sulfide. To that end, and as may be observed in FIG. 1, a feed of the lithium-bearing feedstock 104 from a source of the lithium-bearing feedstock can be continuously metered into a fluidized bed reactor 106 to produce lithium sulfide. Lithium sulfide may be generated in the fluidized bed reactor 106 by contacting the lithium-bearing feedstock 104 with a sulfur-bearing gas such as a fluidizing gas 134 comprising gaseous hydrogen sulfide 108 and a reducing agent. In some examples, the reducing agent may be hydrogen, carbon monoxide, or a combination of both. The reducing agent creates a reducing atmosphere in the fluidized bed reactor 106. In the particular example represented in FIG. 1, the reducing agent is hydrogen 110.

The hydrogen 110 used in the lithium sulfide production process may be obtained from a number of possible hydrogen sources according to examples of the present disclosure. In the particular system 100 example depicted in FIG. 1, the hydrogen 110 is provided by a hydrogen generator 112 that is external to the fluidized bed reactor 106, which may be a hydrogen generation plant. This example of the hydrogen generator 112 generates hydrogen by a steam-methane reforming process wherein natural gas 114 from a natural gas source 116 can be heated by steam 118 from a steam source 120 in the presence of a catalyst to produce the hydrogen 110 and carbon monoxide 122. In other examples, the hydrogen generator 112 may use the steam 118 to heat other fuels such but not limited to propane or ethanol to generate the hydrogen 110. Alternatively, the hydrogen 110, along with other reducing gases such as carbon monoxide, may be generated and supplied by way of other processes such as, for example, autothermal reforming or water electrolysis. In still other examples, hydrogen may be generated by electrolysis using an electrolyzer, or waste hydrogen associated with a refinery or an off-gassing process may be captured and used to supply at least part of the hydrogen to the fluidized bed reactor 106.

As shown, the hydrogen 110 generated by the hydrogen generator 112 can be continuously supplied to the fluidized bed reactor 106 along with the lithium-bearing feedstock 104 for purposes of causing the reaction to convert the lithium-bearing feedstock 104 into lithium sulfide. In some examples, an amount of the carbon monoxide 122 generated by the hydrogen generator 112 during the steam-methane reforming or other process used to generate the hydrogen 110 may be supplied to the fluidized bed reactor 106 along with the hydrogen 110 to assist with producing a reducing atmosphere in the fluidized bed reactor 106. In other examples, the carbon monoxide 122 may be directed to the fluidized bed reactor 106 instead of the hydrogen 110. When not used in the fluidized bed reactor 106, the carbon monoxide 122 may be sequestered or used for another purpose. Likewise, when the carbon monoxide 122 is used in lieu of the hydrogen 110, the hydrogen 110 may be sequestered or used for another purpose.

The gaseous hydrogen sulfide 108 that is reacted with the lithium-bearing feedstock 104 in the fluidized bed reactor 106 to produce the lithium sulfide 102 may be obtained in several ways. In the example configuration of the system 100, the gaseous hydrogen sulfide 108 is provided by a hydrogen sulfide generator 124 that is external to the fluidized bed reactor 106, and may be a hydrogen sulfide plant. The hydrogen sulfide generator 124 may be operative to produce the gaseous hydrogen sulfide 108 by, for example, contacting liquid sulfur with hydrogen. The hydrogen sulfide generator 124 can generate liquid sulfur by, for example, heating and melting a feed of solid sulfur 126 received from a solid sulfur source 128.

The source of the heat used by the hydrogen sulfide generator 124 to melt the incoming feed of solid sulfur 126 may vary in different examples. In this example, the hydrogen sulfide generator 124 uses steam 130 to melt the incoming feed of solid sulfur 126. The steam 130 used by the hydrogen sulfide generator 124 to melt the incoming feed of solid sulfur 126 can be supplied by the same steam source 120 that provides the steam 118 used by the hydrogen generator 112 to generate the hydrogen 110 used to produce a reducing atmosphere in the fluidized bed reactor 106. A separate steam source may supply the steam 130 to the hydrogen sulfide generator 124 in other examples.

The source of the hydrogen used by the hydrogen sulfide generator 124 to generate the gaseous hydrogen sulfide 108 may vary in different examples. In this example, a feed of hydrogen 132 comprising a portion of the hydrogen generated by hydrogen generator 112 can be supplied to the hydrogen sulfide generator 124 for use in generating the gaseous hydrogen sulfide 108. Thus, in this example, the hydrogen 132 used to generate the gaseous hydrogen sulfide 108 and the hydrogen 110 used as a reducing agent in the fluidized bed reactor 106 can be provided by the same hydrogen source - the hydrogen generator 112. The hydrogen 132 used by the hydrogen sulfide generator 124 and the hydrogen 110 used as a reducing agent in the fluidized bed reactor 106 may be provided by separate hydrogen sources in other examples.

To produce the lithium sulfide 102, the fluidizing gas 134 comprising the gaseous hydrogen sulfide 108 from the hydrogen sulfide generator 124 in combination with the hydrogen 110 from the hydrogen generator 112 may be continuously fed into the fluidized bed reactor 106 along with the lithium-bearing feedstock 104. The lithium-bearing feedstock 104 is contacted with the fluidizing gas 134 in the fluidized bed reactor 106, whereby a reaction of the lithium-bearing feedstock 104 with the fluidizing gas 134 causes a reaction that converts the lithium-bearing feedstock 104 to the lithium sulfide 102. The hydrogen 110 in the fluidizing gas 134 causes the reaction of the lithium-bearing feedstock with the fluidizing gas 134 to occur in a reducing atmosphere, thereby ensuring that the reaction desirably produces the lithium sulfide 102 and not lithium sulfate.

To facilitate the reactions between the lithium-bearing feedstock 104 and the fluidizing gas 134, the temperature of the fluidized bed reactor 106 can be maintained within a preferred temperature range. In some examples, the fluidized bed reactor 106 is maintained at a temperature of between 450 °C and 600 °C for this purpose.

In some examples, temperature control of the fluidized bed reactor 106 may be accomplished by using an oxygen-containing gas injector 162 to controllably inject an oxygen-containing gas into the fluidized bed reactor 106. In this example, the oxygen-containing gas is air 136. Once injected, the air 136 or other oxygen-containing gas will react exothermically with the hydrogen 110 and/or another reducing agent present in the fluidized bed reactor 106 to generate the heat required to sustain a continuous lithium sulfide conversion reaction in the fluidized bed reactor 106. The temperature of the fluidized bed reactor 106 can be monitored and the rate at which the air 136 is added may be resultantly controlled to maintain the temperature of the fluidized bed reactor 106 within the desired temperature range. In some examples, temperature control of the fluidized bed reactor 106 may be accomplished by using a temperature controller that receives signals from a temperature sensor that are indicative of the temperature of the fluidized bed reactor 106 and uses the signals to control a feed rate of the air 136 injected into the fluidized bed reactor 106 by the oxygen-containing gas injector 162. In some examples, the flow of the air 136 into the fluidized bed reactor 106 may be a metered continuous flow. In other examples, the flow rate of the air 136 into the fluidized bed reactor 106 may be a semi-continuous flow, meaning that the flow of the air 136 may be stopped periodically.

A fluidized bed of the lithium sulfide 102 produced by the reaction of the lithium-bearing feedstock 104 with the fluidizing gas 134 may be maintained in the fluidized bed reactor 106. Lithium sulfide from the fluidized bed of lithium sulfide 102 may be continuously discharged from the fluidized bed reactor 106 in a controlled manner, such as via a lithium sulfide discharge conduit 138. The discharged lithium sulfide may be transferred to a downstream location, such as to one or more lithium sulfide storage tanks 140. The lithium sulfide produced in the fluidized bed reactor 106 may subsequently be provided for use in a lithium-sulfur battery manufacturing operation 142. Thus, the lithium sulfide storage tanks 140 may be associated with or located at the site of the lithium-sulfur battery manufacturing operation 142. Alternatively, the lithium sulfide 102 discharged from the fluidized bed reactor 106 may bypass storage in the lithium sulfide storage tanks 140 and may be transferred directly to the lithium-sulfur battery manufacturing operation 142 in some examples.

Operation of the fluidized bed reactor 106 generates exhaust gas 144. The exhaust gas 144 may contain excess hydrogen sulfide, reducing gas, and possibly other gaseous components such as but not limited to water vapor, nitrogen, and carbon dioxide. The exhaust gas 144 may also contain some amount of fine lithium sulfide solids 146. A stream of the exhaust gas 144 can be discharged from the fluidized bed reactor 106 via, for example, an exhaust gas discharge conduit 148.

A dust recovery device 150, or multiple dust recovery devices, may be provided and arranged to recover the fine lithium sulfide solids 146 entrained in the stream of the exhaust gas 144. The dust recovery device 150 may be, for example, a cyclone, a bag filter, an electrostatic precipitator, or another device capable of capturing the fine lithium sulfide solids 146 in the exhaust gas 144. As shown, the fine lithium sulfide solids 146 recovered from the exhaust gas 144 may, in some examples, be combined with the lithium sulfide 102 discharged from the fluidized bed reactor 106. In other examples, the fine lithium sulfide solids 146 recovered from the exhaust gas 144 may be collected with other dust that is recovered by the dust recovery device 150 and may be handled separately rather than being recombined with the lithium sulfide 102 discharged from the fluidized bed reactor 106. In still other examples, where the recovered fine lithium sulfide solids 146 were not sufficiently converted to lithium sulfide, such as due to a short residence time in the fluidized bed reactor 106, the recovered fine lithium sulfide solids 146 may be combined with the lithium-bearing feedstock 104 for reintroduction to the fluidized bed reactor 106.

The exhaust gas 144 processed by the dust recovery device 150 may still contain an excess amount of hydrogen sulfide and hydrogen (and/or carbon monoxide 122) reducing agent. Therefore, after being subjected to recovery of the fine lithium sulfide solids 146 in the dust recovery device 150, a stream of the exhaust gas 144 may be discharged from the dust recovery device 150 to a gas treatment and sulfur recovery unit 152. In the gas treatment and sulfur recovery unit 152, sulfur as a solid can be recovered from the exhaust gas 144 and other contaminants in the exhaust gas 144 and can be treated prior to discharge of the exhaust gas 144 to the atmosphere. In some examples, the gas treatment and sulfur recovery unit 152 may be a single device. In other examples, the gas treatment and sulfur recovery unit 152 may include a sulfur recovery device and a separate gas treatment device.

In some examples, the gas treatment and sulfur recovery unit 152 may be operative to recover sulfur as a solid from the exhaust gas 144 through multistage catalytic oxidation of the hydrogen sulfide in the exhaust gas 144. Other processes that can recover sulfur from hydrogen sulfide may also be used. The exhaust gas 144 may be treated by scrubbing or by other known methods to remove or neutralize other contaminants in the exhaust gas 144 and to thereby produce a clean exhaust gas 154. Solid sulfur 156 recovered from the exhaust gas 144 by the gas treatment and sulfur recovery unit 152 can be recycled back into the feed of the solid sulfur 126 provided to the hydrogen sulfide generator 124 or may be transferred to the solid sulfur source 128 for storage or subsequent use. The clean exhaust gas 154 can be discharged to the atmosphere, and any condensed water vapor resulting from treatment of the exhaust gas 144 by the gas treatment and sulfur recovery unit 152 can be discharged as liquid water 158.

As indicated in FIG. 1, the system 100 may optionally be provided with heat recovery functionality. For example, in order to reduce the amount of the air 136 and possibly the amount of the reducing agent (e.g., hydrogen 110) required to be input to the fluidized bed reactor 106, while also maintaining the fluidized bed reactor 106 at a desired temperature relative to the lithium sulfide conversion reaction, process heat may be recovered and added back to the fluidized bed reactor 106 in some examples of the system 100. To this end, a heat recovery unit 160 may be included. The heat recovery unit 160 may recover waste heat from the exhaust gas 144 discharged by the fluidized bed reactor 106. In this example, the heat recovery unit 160 may be arranged to recover waste heat from the exhaust gas 144 prior to entry of the exhaust gas 144 into the dust recovery device 150. In other examples, it may be possible to instead recover waste heat from the exhaust gas 144 after the exhaust gas 144 is discharged from the dust recovery device 150 or elsewhere. As indicated in FIG. 1, heat recovered by the heat recovery unit 160 may be recirculated to the fluidized bed reactor 106 such as, for example, by introducing the recovered heat into the flow of the air 136 and/or into the feed of the fluidizing gas 134 directed to the fluidized bed reactor 106.

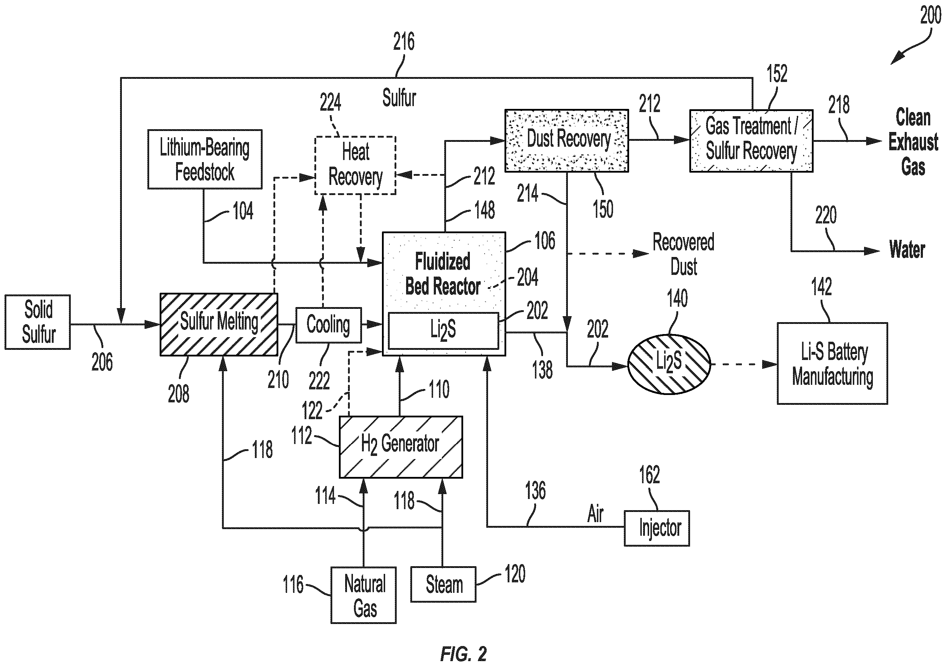

FIG. 2 is a schematic representation of a system 200 for continuously producing lithium sulfide from a lithium-bearing feedstock according to another example configuration. In FIG. 2, redundant portions of the system 100 of FIG. 1 have been reused to better illustrate differences between the example system 200 and the example system 100. In this regard, components of the system 200 of FIG. 2 that have commonality with the components of the system 100 of FIG. 1 are indicated by the same reference numbers used in FIG. 1.

According to the example configuration of FIG. 2, the system 200 may include at least the fluidized bed reactor 106, the hydrogen generator 112, the dust recovery device 150, the gas treatment and sulfur recovery unit 152, and the oxygen-containing gas injector 162 of the system 100 of FIG. 1. The feed of lithium-bearing feedstock 104 from the source of the lithium-bearing feedstock can again be continuously metered into a fluidized bed reactor 106 to produce lithium sulfide 202. The lithium-bearing feedstock 104 may be lithium hydroxide or other lithium-bearing feedstocks as described above with respect to the system 100 of FIG. 1.

The hydrogen generator 112 can again be used to generate the hydrogen 110 that may be provided to the fluidized bed reactor 106 to create a reducing atmosphere in which the reaction used to convert the lithium-bearing feedstock 104 into lithium sulfide can take place. The hydrogen generator 112 may again generate hydrogen 110 (and/or carbon monoxide 122) using a steam-methane reforming process wherein the natural gas 114 from the natural gas source 116 can be heated by the steam 118 from the steam source 120 in the presence of a catalyst. Other processes, including those described above with respect to the system of FIG. 1, may also be used for this purpose.

In the previously described system 100, the hydrogen sulfide fluidizing gas 134 is provided to the fluidized bed reactor 106 by the hydrogen sulfide generator 124 that is that is external to the fluidized bed reactor 106 and generates liquid sulfur and subsequently combines the liquid sulfur with the hydrogen 110 from the hydrogen generator 112. In contrast, the system 200 of FIG. 2 is operative to generate gaseous hydrogen sulfide 204 in the fluidized bed reactor 106 rather than generating gaseous hydrogen sulfide externally of the fluidized bed reactor 106. For example, in the system 200 of FIG. 2, solid sulfur 206 may be melted in a sulfur melter 208 to generate liquid sulfur 210. Various heat sources may be used to provide the heat required to melt the solid sulfur 206 in the sulfur melter 208. In this particular example, the heat may be provided by a diverted portion of the steam 118 that is supplied to the hydrogen generator 112 from the steam source 120. The liquid sulfur 210- which is molten upon its exit from the sulfur melter 208 - may then be cooled by a cooling device 222 and thereafter introduced directly into the fluidized bed reactor 106 where the liquid sulfur can react with an amount of the hydrogen 110 provided to the fluidized bed reactor 106 by the hydrogen generator 112 to generate the gaseous hydrogen sulfide 204 in the fluidized bed reactor 106. The hydrogen 110 may be introduced to the fluidized bed reactor 106 in an amount in excess of that required to generate the gaseous hydrogen sulfide 204 so that there is sufficient hydrogen in the fluidized bed reactor 106 to also create a reducing atmosphere.

Contact of the lithium-bearing feedstock 104 with the gaseous hydrogen sulfide 204 generated in the fluidized bed reactor 106 in the reducing atmosphere created by the hydrogen 110 causes the above-described reaction by which the lithium-bearing feedstock 104 is converted to the lithium sulfide 202. The temperature of the fluidized bed reactor 106 may again be maintained within a temperature range of between 450 °C and 600 °C by injecting an oxygen-containing gas such as air 136 into the fluidized bed reactor 106 as described above with respect to the system 100 of FIG. 1.

A fluidized bed of the lithium sulfide 202 may again be produced by the system 200 of FIG. 2, and the lithium sulfide 202 may be continuously discharged from the fluidized bed reactor 106 in a controlled manner, such as to the one or more lithium sulfide storage tanks 140 or to the lithium-sulfur battery manufacturing operation 142, as previously described.

The fluidized bed reactor 106 of the system 200 may again produce exhaust gas 212. Fine lithium sulfide solids 214 entrained in a stream of the exhaust gas 212 may again be recovered by the dust recovery device 150, or multiple dust recovery devices, and thereafter transferred to another location or used in any manner described above relative to the system 100 of FIG. 1. Likewise, the gas treatment and sulfur recovery unit 152 may again be used to recover solid sulfur 216 as a solid from the exhaust gas 212 and the exhaust gas 212 may otherwise be treated to remove or neutralize other contaminants in the exhaust gas 212 and to thereby produce a clean exhaust gas 218 by any technique described above relative to the system 100 of FIG. 1. The solid sulfur 216 recovered from the exhaust gas 212 by the gas treatment and sulfur recovery unit 152 can be recycled back into the feed of the solid sulfur 206 supplied to the sulfur melter 208. As previously described, the clean exhaust gas 218 can be discharged from the gas treatment and sulfur recovery unit 152 to the atmosphere, and any condensed water vapor resulting from treatment of the exhaust gas 212 can be discharged as liquid water 220.

As indicated in FIG. 2, the system 200 may also optionally be provided with a heat recovery unit 224 that can be used for any of the purposes described above relative to the system 100 of FIG. 1. In this example of the system 200, the heat recovery unit 224 may be operative to recover waste heat from the exhaust gas 212 discharged by the fluidized bed reactor 106 in the previously described manner, and/or to recover waste heat from the sulfur melter 208 and/or from the stream of molten liquid sulfur 210 directed to the cooling device 222. As indicated in FIG. 2, heat recovered by the heat recovery unit 224 may be recirculated to the fluidized bed reactor 106 such as, for example, by introducing the recovered heat into the feed of the lithium-bearing feedstock 104. While not shown in FIG. 2, heat recovered by the heat recovery unit 224 may instead or also be directed to the flow of the air 136 used to control the temperature of the fluidized bed reactor 106, in a manner similar to that illustrated in FIG. 1.

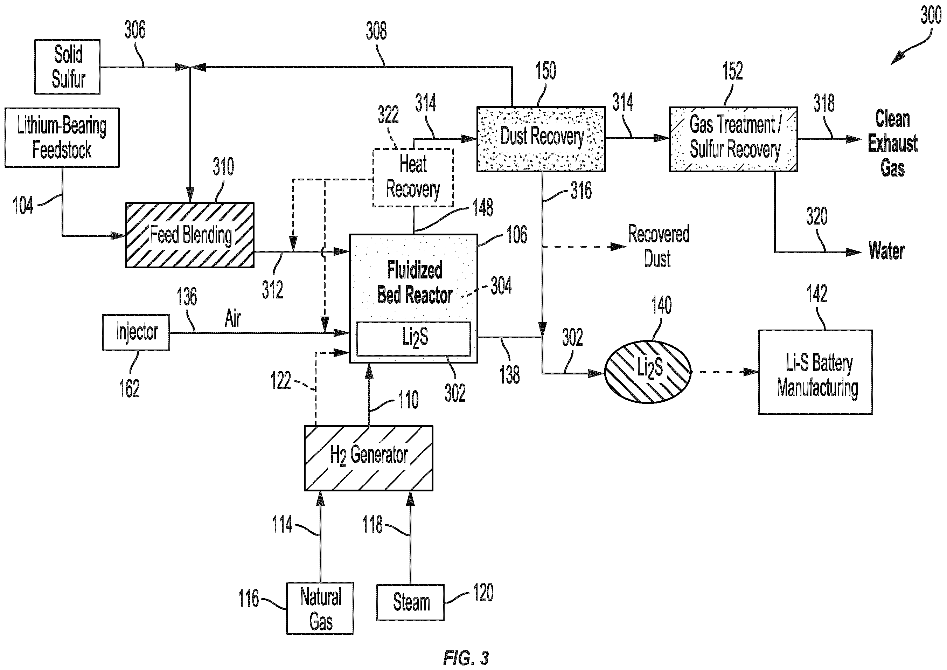

FIG. 3 is a schematic representation of a system 300 for continuously producing lithium sulfide from a lithium-bearing feedstock according to another example configuration. In FIG. 3, redundant portions of the system 100 of FIG. 1 have again been reused to better illustrate differences between the example system 300 and the example system 100. In this regard, components of the system 300 of FIG. 3 that have commonality with the components of the system 100 of FIG. 1 are indicated by the same reference numbers used in FIG. 1.

According to the example configuration of FIG. 3, the system 300 may include, among other components, the fluidized bed reactor 106, the hydrogen generator 112, the dust recovery device 150, the gas treatment and sulfur recovery unit 152, and the oxygen-containing gas injector 162 of the system 100 of FIG. 1. A feed of the lithium-bearing feedstock 104 from the source of the lithium-bearing feedstock can again be continuously metered into the fluidized bed reactor 106 to produce lithium sulfide 302. The lithium-bearing feedstock 104 may be lithium hydroxide or other lithium-bearing feedstocks as described above with respect to the system 100 of FIG. 1.

The hydrogen generator 112 can again be sued to generate hydrogen 110 that may be provided to the fluidized bed reactor 106 to create a reducing atmosphere in which the reaction used to produce lithium sulfide can take place. The hydrogen generator 112 may again generate the hydrogen 110 (and/or carbon monoxide 122) using a steam-methane reforming process wherein the natural gas 114 from the natural gas source 116 can be heated by the steam 118 from the steam source 120 in the presence of a catalyst. Other processes, including those described above with respect to the system of FIG. 1, may also be used for this purpose.

In the previously described system 100, the hydrogen sulfide fluidizing gas 134 that is introduced to the fluidized bed reactor 106 is provided by a hydrogen sulfide generator 124 that is external to the fluidized bed reactor 106 and generates liquid sulfur and subsequently contacts the liquid sulfur with the hydrogen 110 from the hydrogen generator 112. In contrast, the system 300 of FIG. 3 is operative to generate gaseous hydrogen sulfide 304 directly in the fluidized bed reactor 106 rather than generating gaseous hydrogen sulfide externally of the fluidized bed reactor 106. For example, in the system 300 of FIG. 3, solid sulfur 306 may be blended with the lithium-bearing feedstock 104 in a feed blender 310 to create a mixture 312 of the lithium-bearing feedstock 104 and the solid sulfur 306. Recovered solid sulfur 308 from the gas treatment and sulfur recovery unit 152 may also be used in the mixture 312.

The mixture 312 of the lithium-bearing feedstock and sulfur can be continuously fed into the fluidized bed reactor 106, where the sulfur can react with the hydrogen 110 from the hydrogen generator 112 to form the gaseous hydrogen sulfide 304 in the fluidized bed reactor 106. Contact of the lithium-bearing feedstock 104 in the mixture 312 with the gaseous hydrogen sulfide 304 generated in the fluidized bed reactor 106 in the reducing atmosphere created by the hydrogen 110 causes the above-described reaction by which the lithium-bearing feedstock 104 is converted to the lithium sulfide 302. The temperature of the fluidized bed reactor 106 may again be maintained within a temperature range of between 450 °C and 600 °C by injecting an oxygen-containing gas such as air 136 into the fluidized bed reactor 106 as described above with respect to the system 100 of FIG. 1.

A fluidized bed of the lithium sulfide 302 may again be produced by the system 300 of FIG. 3, and the lithium sulfide 302 may be continuously discharged from the fluidized bed reactor 106 in a controlled manner, such as to the one or more lithium sulfide storage tanks 140 or to the lithium-sulfur battery manufacturing operation 142, as previously described.

The fluidized bed reactor 106 of the system 300 may again produce exhaust gas 314. Fine lithium sulfide solids 316 entrained in a stream of the exhaust gas 314 may again be recovered by the dust recovery device 150, or multiple dust recovery devices, and thereafter transferred to another location or used in any manner described above relative to the system 100 of FIG. 1. Likewise, the gas treatment and sulfur recovery unit 152 may be used to recover from the exhaust gas 314, solid sulfur 308 that may thereafter be combined with the solid sulfur 306 that is provided to the feed blender 310. The exhaust gas 314 may also otherwise be treated to remove or neutralize other contaminants therein to produce a clean exhaust gas 318 by any technique described above relative to the system 100 of FIG. 1. As previously described with respect to the system 100 of FIG. 1, the clean exhaust gas 318 can be discharged from the gas treatment and sulfur recovery unit 152 to the atmosphere, and any condensed water vapor resulting from treatment of the exhaust gas 314 can be discharged as liquid water 320.

As indicated in FIG. 3, the system 300 may also optionally be provided with a heat recovery unit 322 that can be used for any of the purposes described above relative to the system 100 of FIG. 1. In this example system 300, the heat recovery unit 322 may be operative to recover waste heat from the exhaust gas 314 discharged by the fluidized bed reactor 106 in the previously described manner. As indicated in FIG. 3, heat recovered by the heat recovery unit 322 may be recirculated to the fluidized bed reactor 106 such as, for example, by introducing the recovered heat into the mixture 312 of the lithium-bearing feedstock and sulfur directed to the fluidized bed reactor 106. In some examples, heat recovered by the heat recovery unit 322 may additionally, or alternatively, be directed to the flow of the air 136 used to control the temperature of the fluidized bed reactor 106 in a manner similar to that described and illustrated with respect to FIG. 1.

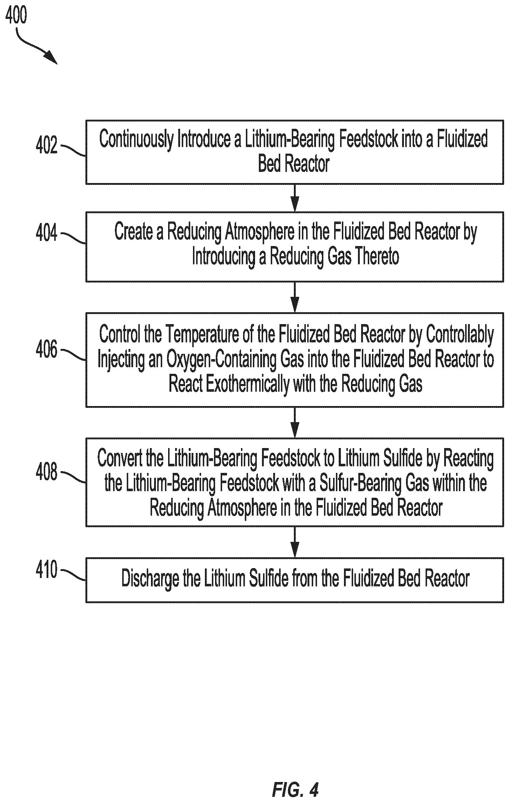

FIG. 4 is a flowchart 400 illustrating a method of continuously producing lithium sulfide from a lithium-bearing feedstock according to one example. As indicated in block 402 a lithium-bearing feedstock can be continuously introduced into a fluidized bed reactor. In some examples, the lithium-bearing feedstock may be lithium hydroxide, but other types of lithium-bearing feedstocks, such as but not limited to, lithium salts, may be used in other examples.

As indicated in block 404, a reducing atmosphere may be created in the fluidized bed reactor by continuously introducing a reducing gas into the fluidized bed reactor. In some examples, the reducing gas may be hydrogen, carbon monoxide, or a combination thereof. In some examples, the hydrogen and/or carbon monoxide reducing gas can be produced by a hydrogen generator that steam heats natural gas in the presence of a catalyst and subsequently introduces the hydrogen and/or carbon monoxide into the fluidized bed reactor.

As indicated in block 406, a temperature of the fluidized bed reactor may be controlled within a temperature range within which the conversion reaction of the lithium-bearing feedstock to the lithium sulfide can take place. In some examples, the temperature of the fluidized bed reactor may be maintained by controllably injecting an oxygen-containing gas into the fluidized bed reactor such that the oxygen-containing gas reacts exothermically with the reducing gas. The oxygen-containing gas may be air in some examples.

As indicated in block 408, the lithium-bearing feedstock can be converted to lithium sulfide by reacting the lithium-bearing feedstock with a sulfur-bearing gas within the reducing atmosphere in the fluidized bed reactor. In some examples, the sulfur-bearing gas may be gaseous hydrogen sulfide. In some examples, the gaseous hydrogen sulfide may be generated externally to the fluidized bed reactor and continuously introduced thereto. For example, the gaseous hydrogen sulfide may be generated by using a hydrogen sulfide generator that produces liquid sulfur by melting solid sulfur and combines the liquid sulfur with hydrogen to form the gaseous hydrogen sulfide. In other examples, the gaseous hydrogen sulfide may be continuously generated directly in the fluidized bed reactor. For example, a sulfur melter may be used to produce liquid sulfur by melting solid sulfur and to thereafter introduce the liquid sulfur into the fluidized bed reactor to form the gaseous hydrogen sulfide in the fluidized bed reactor through a reaction of the liquid sulfur with at least some of the hydrogen present in the fluidized bed reactor. In another example, a feed blender may be used to produce a mixture of solid sulfur and the lithium-bearing feedstock and to introduce the mixture into the fluidized bed reactor to form the gaseous hydrogen sulfide in the fluidized bed reactor through a reaction of the solid sulfur in the mixture with at least some of the hydrogen present in the fluidized bed reactor.

As indicated in block 410, the lithium sulfide generated in the fluidized bed reactor can be discharged therefrom to one or more downstream locations. The lithium sulfide can be continuously discharged from the fluidized bed reactor. In an example, the discharged lithium sulfide can be directed to one or more storage tanks. In another example, the discharged lithium sulfide can be transferred directly to a lithium-sulfur battery manufacturing operation.

As part of a method of continuously producing lithium sulfide from a lithium-bearing feedstock, the various examples presented herein describe introducing a sulfur-bearing gas into a fluidized bed reactor or generating a sulfur-bearing gas in a fluidized bed reactor. It is to be understood, however, that other examples of continuously producing lithium sulfide from a lithium-bearing feedstock may instead include introducing a sulfur-bearing liquid into a fluidized bed reactor. Likewise, while the lithium-bearing feedstock described with respect to the example systems and methods presented herein is intended to be a dry feedstock, the lithium-bearing feedstock may be a liquid feedstock in other examples.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A method of producing lithium sulfide comprising:
continuously introducing a lithium-bearing feedstock into a fluidized bed reactor;
generating a reducing atmosphere in the fluidized bed reactor by continuously introducing a reducing gas into the fluidized bed reactor;
controlling a temperature of the fluidized bed reactor by controllably injecting an oxygen-containing gas into the fluidized bed reactor such that the oxygen-containing gas reacts exothermically with the reducing gas;
reacting the lithium-bearing feedstock with a sulfur-bearing gas within the reducing atmosphere in the fluidized bed reactor to thereby convert the lithium-bearing feedstock into lithium sulfide; and
discharging the lithium sulfide from the fluidized bed reactor;
optionally, wherein the temperature of the fluidized bed reactor is maintained between 450 °C and 600 °C.

2. The method of claim 1, wherein:
the lithium-bearing feedstock is lithium hydroxide; and
the reducing gas is hydrogen, carbon monoxide, or a combination of both.

3. The method of claim 1, wherein the sulfur bearing gas is gaseous hydrogen sulfide; optionally, wherein the gaseous hydrogen sulfide is generated externally to the fluidized bed reactor by combining liquid sulfur with hydrogen to form the gaseous hydrogen sulfide, and the gaseous hydrogen sulfide is continuously introduced into the fluidized bed reactor; and/or optionally, wherein the reducing gas is or includes hydrogen and the gaseous hydrogen sulfide is generated in the fluidized bed reactor by continuously introducing liquid sulfur into the fluidized bed reactor such that the liquid sulfur reacts with at least some of the hydrogen; and/or optionally, wherein the reducing gas is or includes hydrogen and the gaseous hydrogen sulfide is generated in the fluidized bed reactor by creating a mixture of solid sulfur and the lithium-bearing feedstock and continuously introducing the mixture into the fluidized bed reactor such that the solid sulfur in the mixture reacts with at least some of the hydrogen.

4. The method of claim 1, further comprising recovering lithium sulfide solids from a stream of exhaust gas discharged from the fluidized bed reactor and combining the lithium sulfide solids with the lithium sulfide discharged from the fluidized bed reactor.

5. The method of claim 1, further comprising recovering solid sulfur from a stream of exhaust gas discharged from the fluidized bed reactor and reusing the recovered solid sulfur to generate, at least in part, the sulfur-bearing gas.

6. The method of claim 1, further comprising recovering heat from a stream of exhaust gas discharged from the fluidized bed reactor and returning the recovered heat to the fluidized bed reactor via heating with the recovered heat, prior to introduction into the fluidized bed reactor, one or both of the lithium-bearing feedstock and the oxygen-containing gas.

7. A system for continuously producing lithium sulfide comprising:
a fluidized bed reactor;
a source of a lithium-bearing feedstock in communication with the fluidized bed reactor and usable to supply a continuous feed of the lithium-bearing feedstock to the fluidized bed reactor;
a source of a reducing gas in communication with the fluidized bed reactor and usable to supply a continuous feed of the reducing gas to the fluidized bed reactor;
an oxygen-containing gas injector associated with the fluidized bed reactor and configured to controllably inject an oxygen-containing gas into the fluidized bed reactor to control a temperature of the fluidized bed reactor via an exothermic reaction of the oxygen-containing gas with the reducing gas;
a sulfur-bearing gas within the fluidized bed reactor; and
wherein the fluidized bed reactor is configured to produce the lithium sulfide through a conversion reaction of the lithium-bearing feedstock with the sulfur-bearing gas within a reducing atmosphere in the fluidized bed reactor.

8. The system of claim 7, wherein:
the lithium-bearing feedstock is lithium hydroxide; and
the reducing gas is hydrogen, carbon monoxide, or a combination of both.

9. The system of claim 7, wherein the source of the reducing gas is a hydrogen generator configured to produce a mixture of hydrogen and carbon monoxide by steam heating natural gas in the presence of a catalyst.

10. The system of claim 7, wherein the sulfur-bearing gas is gaseous hydrogen sulfide.

11. The system of claim 10, further comprising a hydrogen sulfide generator in communication with the fluidized bed reactor, the hydrogen sulfide generator configured to produce liquid sulfur by melting solid sulfur and to combine the liquid sulfur with hydrogen to form the gaseous hydrogen sulfide for introduction into the fluidized bed reactor.

12. The system of claim 10, wherein:
the reducing gas is or includes hydrogen; and
a sulfur melter is in communication with the fluidized bed reactor and is configured to produce liquid sulfur by melting solid sulfur and to introduce the liquid sulfur into the fluidized bed reactor to form the gaseous hydrogen sulfide in the fluidized bed reactor through a reaction of the liquid sulfur with at least some of the hydrogen.

13. The system of claim 10, wherein:
the reducing gas is or includes hydrogen; and
a feed blender is in communication with the fluidized bed reactor, the feed blender configured to produce a mixture of solid sulfur and the lithium-bearing feedstock and to introduce the mixture into the fluidized bed reactor to form the gaseous hydrogen sulfide in the fluidized bed reactor through a reaction of the solid sulfur in the mixture with at least some of the hydrogen.

14. A reactant generation system for a continuous production lithium sulfide fluidized bed reactor comprising:
a hydrogen generator in fluid communication with a natural gas source and a steam source, the hydrogen generator configured to generate hydrogen and carbon monoxide by using steam from the steam source to heat natural gas from the natural gas source in the presence of a catalyst; and
a hydrogen sulfide generator in fluid communication with the fluidized bed reactor, the hydrogen generator, and the steam source, and arranged to receive solid sulfur from a solid sulfur source, a portion of the steam from the steam source, and a portion of the hydrogen generated by the hydrogen generator, the hydrogen sulfide generator configured to produce liquid sulfur by melting the solid sulfur using the steam and to continuously generate gaseous hydrogen sulfide for introduction into the fluidized bed reactor by reacting the liquid sulfur with the hydrogen from the hydrogen generator;
optionally, wherein the hydrogen generator is further in fluid communication with the fluidized bed reactor to discharge hydrogen, carbon monoxide, or both, as a reducing gas into the fluidized bed reactor; and/or
optionally, wherein the hydrogen sulfide generator is further arranged to receive, from a gas treatment and sulfur recovery unit, recycled solid sulfur recovered by the gas treatment and sulfur recovery unit from an exhaust gas stream of the fluidized bed reactor, and is configured to use at least some of the recycled solid sulfur to generate the gaseous hydrogen sulfide.
